# EUROPÄISCHE PATENTSCHRIFT

(11) **EP 1 856 438 B1**
(45) Veröffentlichungstag und Bekanntmachung des Hinweises auf die Patenterteilung: **05.08.2009**
(21) Anmeldenummer: 06723427.8
(22) Anmeldetag: 08.03.2006
(51) Int. Cl.: F16L 55/10

(54) **SICHERUNGSSYSTEM ZUM VERBINDEN UND LÖSEN ZWEIER KUPPLUNGSHÄLFTEN SOWIE ABREISSKUPPLUNG MIT EINEM SOLCHEN SICHERUNGSSYSTEM**
SECURITY SYSTEM FOR CONNECTING AND DISCONNECTING TWO COUPLING HALVES AND A BREAKING COUPLING PROVIDED WITH SAID SECURITY SYSTEM
SYSTEME DE SECURITE PERMETTANT DE RELIER ET DE DETACHER DEUX DEMI-MANCHONS D'ACCOUPLEMENT ET ACCOUPLEMENT DE RUPTURE DOTE D'UN SYSTEME DE SECURITE

(30) Priorität: 08.03.2005 DE 102005011600
(43) Veröffentlichungstag der Anmeldung: 21.11.2007
(73) Patentinhaber: Roman Seliger GmbH, 22848 Norderstedt (DE)
(72) Erfinder: KOPPLIN, Gerhard, 22885 Barsbüttel (DE); ADAM, Michael, 24589 Schülp (DE); HAMKENS, Hauke-Peter, 22453 Hamburg (DE)
(74) Vertreter: Bamberger, Stephan
(86) Internationale Anmeldenummer: PCT/EP2006/002350
(87) Internationale Veröffentlichungsnummer: WO 2006/094839

(56) Entgegenhaltungen:
- EP-A- 0 517 127
- DE-A1- 1 931 597
- DE-C1- 4 202 491
- DE-U1- 20 007 117
- DE-U1-2202005 012 60
- DE-U1-5202005 014 27
- US-B1- 6 269 836

## Beschreibung

Die Erfindung betrifft ein Sicherungssystem zum Verbinden und Lösen zweier Kupplungshälften, umfassend ein Sicherungselement mit mindestens zwei Hebelelementen sowie ein Auslöseelement. Des weiteren betrifft die Erfindung eine Abreißkupplung zum Verbinden von flüssige oder gasförmige Medien transportierenden Förderleitungen, umfassend zwei lösbar miteinander verbundene Kupplungshälften, die jeweils über Absperrmittel verfügen, wobei die Absperrmittel in zusammengefügtem Zustand der Kupplungshälften einen Durchstrom des zu transportierenden Mediums gewährleisten und beim Trennen der Kupplungshälften diese zwangsläufig dichtend verschließen, und ein Sicherungssystem zum Verbinden und Lösen der Kupplungshälften.

Solche Abreißkupplungen, die auch als Not-Trennkupplung bezeichnet werden, kommen insbesondere in der chemischen oder lebensmitteltechnischen Industrie zum Einsatz und dienen zum Verbinden zweier Förderleitungen, z.B. um in einem Tank gelagertes flüssiges oder gasförmiges Medium in ein anderes Behältnis zu fördern siehe beispielsweise die DE 42 02 491 C1. Im Falle einer drohenden Beschädigung oder Überlastung der Förderleitungen bzw. der Anschlüsse und der Kupplung selbst, insbesondere durch Zugbeanspruchung der Kupplungshälften, wird durch die Abreißkupplung sichergestellt, dass sich die Kupplungshälften voneinander lösen, so dass sich die Absperrmittel der Kupplungshälften in Schließstellung bewegen. Ein beispielhafter Anwendungsfall ist z.B. ein mit Chemikalien beladener Tanklastzug, aus dem das Medium in ein Behältnis gepumpt werden soll. Wenn sich der Tanklastzug nach Beendigung oder während des Pumpvorganges vom Behältnis entfernt, ohne die durch die Förderleitungen bestehende Verbindung zu lösen, stellt die Abreißkupplung sicher, dass das Trennen an einer definierten Position erfolgt und verhindert damit, dass das in den Förderleitungen strömende oder noch befindliche Medium aus den nach dem Trennen dann freien Leitungsenden ungewollt austritt und dadurch zu Kontaminationen oder dergleichen führt.

Um eine sichere und zuverlässige Funktion solcher Abreißkupplungen oder auch anderer Verbindungen von Leitungen, Kupplungen oder dergleichen zu gewährleisten, kommt es entscheidend auf das Sicherungssystem und insbesondere auch auf das Auslöseelement an. Es sind unterschiedliche Arten von Sicherungssystemen und Auslöselementen bekannt. Als Auslöseelement wird ein Element verstanden, das als Bestandteil eines Sicherungssystems das Sicherungselement, das die Kupplungshälften, Leitungsenden oder dergleichen in gekuppeltem bzw. verbundenem Zustand hält, freigibt, so dass sich die Kupplungshälften, Leitungsenden oder dergleichen in kürzester Zeit vollständig voneinander lösen können.

Als Auslöseelement sind aus der DE 200 07 117 U1 z.B. ringartige Manschetten bekannt, die über das Sicherungselement gestülpt sind. Zum Lösen der Verbindung muss die Manschette durch Zug, Druck oder eine andere Belastung vom Sicherungselement gezogen werden. Dies hat jedoch den Nachteil, dass sich die Verbindung nur unzureichend löst. Weiterhin ist aus der US 6,269,836 B1 ein Auslöseelement bekannt, das das Sicherungselement, das mehrere Hebel aufweist, gegenüber den Kupplungshälften abstützt. Anders ausgedrückt, wird das Auslöseelement zwischen die Hebel einerseits und eine Kupplungshälfte andererseits geklemmt. Durch das Herausziehen des Auslöseelementes erhalten die Hebel einen begrenzten Spielraum, so dass sie von dem Sicherungselement wegklappen können. Durch den begrenzten Spielraum kommt es jedoch häufig zum Verkanten des Auslöseelementes sowie zu Verklemmungen.

Wie bereits erwähnt, finden die beschriebenen Sicherungssysteme und Auslöseelemente häufig Anwendung in Abreißkupplungen oder dergleichen.

Die bekannten Auslöseelemente, Sicherungssysteme und Abreißkupplungen weisen jedoch den gemeinsamen Nachteil auf, dass sie einen komplizierten Aufbau aufweisen und in der Handhabung kompliziert sind. Ein weiterer Nachteil besteht darin, dass das Zeitfenster, in dem das vollständige Lösen stattfindet, relativ groß ist, so dass in diesem Zeitraum eine beachtliche Menge an Medium austreten kann.

Es ist daher Aufgabe der vorliegenden Erfindung, ein einfach aufgebautes und leicht handhabbares Sicherungssystem hoher Zuverlässigkeit für Kupplungsvorrichtungen zu schaffen. Schließlich ist es Aufgabe der vorliegenden Erfindung, eine einfache und leicht handhabbare Abreißkupplung hoher Zuverlässigkeit vorzuschlagen.

Diese Aufgabe wird durch ein Sicherungssystem mit den Merkmalen des Anspruchs 1 gelöst. Dadurch ist ein verkantungsfreies Lösen des Auslöseelementes vom Sicherungselement gewährleistet. Durch die Tatsache, dass das Auslöseelement keinen direkten Kontakt zu den Kupplungshälften aufweist, entsteht ein instabiles System, sobald das Auslöseelement das Sicherungselement an einer Position freigibt. Das bedeutet, dass das Sicherungselement seine gesamte Stabilität verliert, wenn das Auslöseelement betätigt wird. Dadurch ist ein vollständiges Lösen der Verbindung von Sicherungselement mit den Kupplungshälften in einem äußerst kurzen Zeitfenster sichergestellt.

Vorteilhafterweise ist das Auslöseelement ein Ring, der derart ausgebildet ist, dass er sich gegenüber dem Sicherungselement abstützt. Mit dieser Ausbildung ist gewährleistet, dass durch die direkte und ausschließlich Wirkverbindung zwischen dem Auslöseelement und dem Sicherungselement ein besonders schnelles und zuverlässiges Lösen realisieren lässt.

In einer bevorzugten Weiterbildung der Erfindung sind dem Auslöseelement Abstandsmittel zugeordnet, die sich in Längsrichtung der Mittelachse des Auslöseelementes erstrecken. Dadurch wird sichergestellt, dass das Auslöseelement beim Abziehen nicht ausweichen kann, sondern sich ausschließlich in Zugrichtung bewegt. Anders ausgedrückt stützt sich das Auslöseelement mit dem Abstandsmittel gegenüber dem Sicherungselement bzw. den Kupplungshälften ab, so dass ein Verkanten des Auslöseelementes gegenüber dem Sicherungselement bzw. den Kupplungshälften wirksam verhindert wird.

Vorzugsweise ist das Sicherungselement aus einem ringförmigen Träger mit drei daran angeordneten Kipphebeln gebildet. Dadurch ist eine einfache und robuste Bauweise gewährleistet.

Weiterhin wird die Aufgabe durch eine Abreißkupplung der eingangs genannten Art dadurch gelöst, dass das Sicherungssystem nach einem der Ansprüche 1 bis 15 ausgebildet ist. Die sich hieraus ergebenen Vorteile wurden bereits im Zusammenhang mit dem Sicherungssystem beschrieben, weswegen hierauf verwiesen wird.

Weitere bevorzugte und vorteilhafte Merkmale und Ausführungsformen ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine perspektivische Darstellung einer Abreißkupplung mit einem Sicherungs- system,
- Fig. 2: eine Vorderansicht der Abreißkupplung gemäß Figur 1,
- Fig. 3: eine Seitenansicht der Abreißkupplung gemäß Figur 2 im Schnitt III-III,
- Fig. 4: eine Draufsicht auf ein Auslöseelement,
- Fig. 5: eine perspektivische Darstellung des Auslöseelementes gemäß Figur 4,
- Fig. 6: eine Seitenansicht des Auslöseelementes gemäß Figur 4 im Schnitt VI-VI,
- Fig. 7: eine Seitenansicht des Auslöselementes gemäß Figur 4,
- Fig. 8: eine Draufsicht auf ein Auslöseelement mit einem Führungsmittel für das Betätigungsmittel,
- Fig. 9: eine perspektivische Darstellung des Auslöseelementes gemäß Figur 8,
- Fig. 10: eine Seitenansicht des Auslöseelements gemäß Figur 8 im Schnitt X-X,
- Fig. 11: eine Seitenansicht des Auslöseelementes gemäß Figur 8,
- Fig. 12: eine Draufsicht auf ein Sicherungssystem mit Sicherungselement und Auslöse- element,
- Fig. 13: eine perspektivische Darstellung des Sicherungssystems gemäß Figur 12,
- Fig. 14: eine Seitenansicht des Sicherungssystems gemäß Figur 12 im Schnitt XIV-XIV,
- Fig. 15: eine Seitenansicht des Sicherungssystems gemäß Figur 12,
- Fig. 16: eine Seitenansicht eines einzelnen Hebelelementes, und
- Fig. 17: eine Draufsicht auf das Hebelelement gemäß Figur 16.

Das gezeigte Auslöseelement dient zum Sichern und Lösen von Sicherungssystemen, wie sie z.B. an Kupplungsvorrichtungen zum Einsatz kommen. Gleiches gilt für das entsprechende Sicherungssystem. Die gezeigte Abreißkupplung dient zum Verbinden von flüssige oder gasförmige Medien transportierenden Förderleitungen.

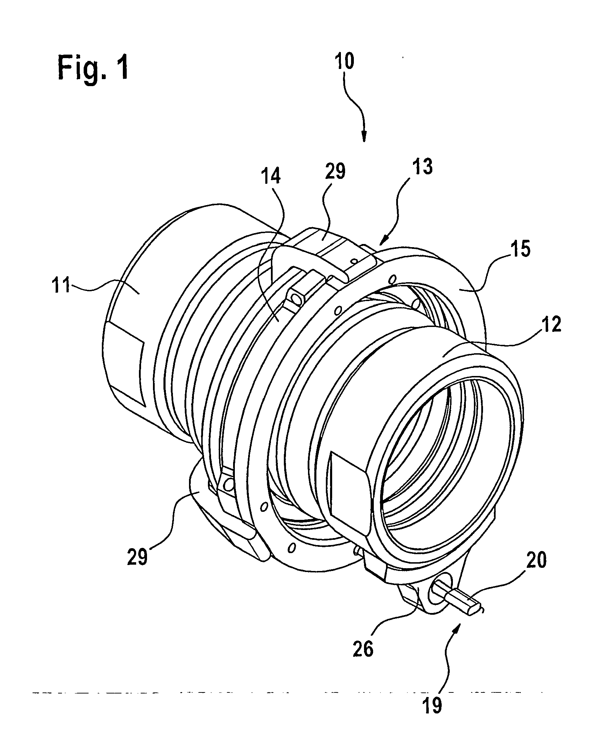

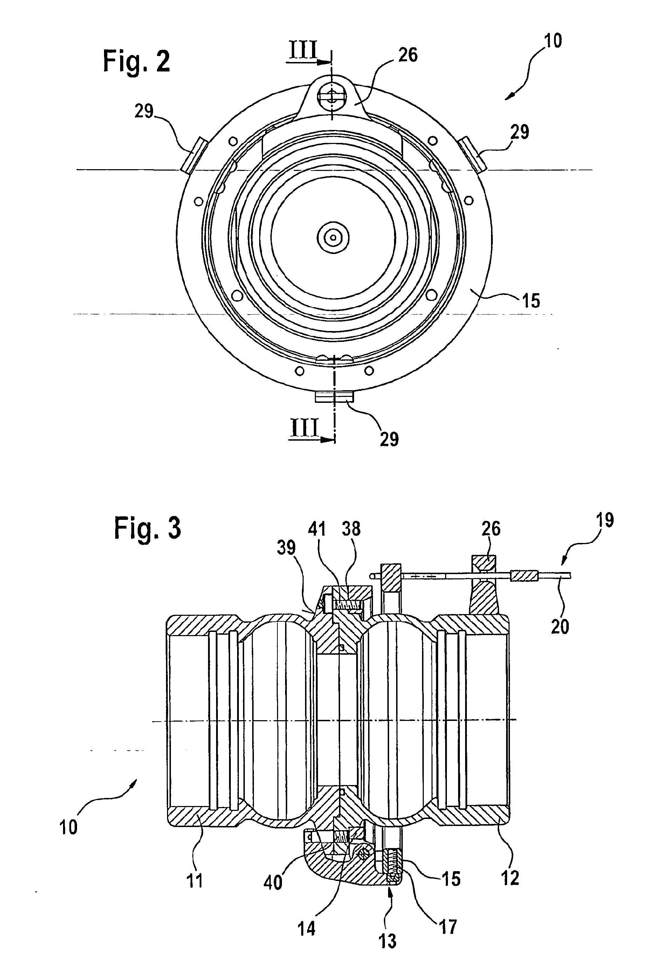

Zum besseren Verständnis der Erfindung werden die wesentlichen Komponenten anhand eines beispielhaften Einsatzgebietes für ein Auslöseelement und ein Sicherungssystem an einer Kupplungsvorrichtung erläutert. Die Abreißkupplung 10 in den Figuren 1 bis 3 umfasst zwei Kupplungshälften 11 und 12, die mit einem Sicherungssystem 13 lösbar miteinander verbunden sind. Das Sicherungssystem 13, das selbstverständlich auch andere Elemente, z.B. freie Leitungsenden oder dergleichen, verbinden und sichern kann, weist ein Sicherungselement 14 und ein Auslöseelement 15 auf.

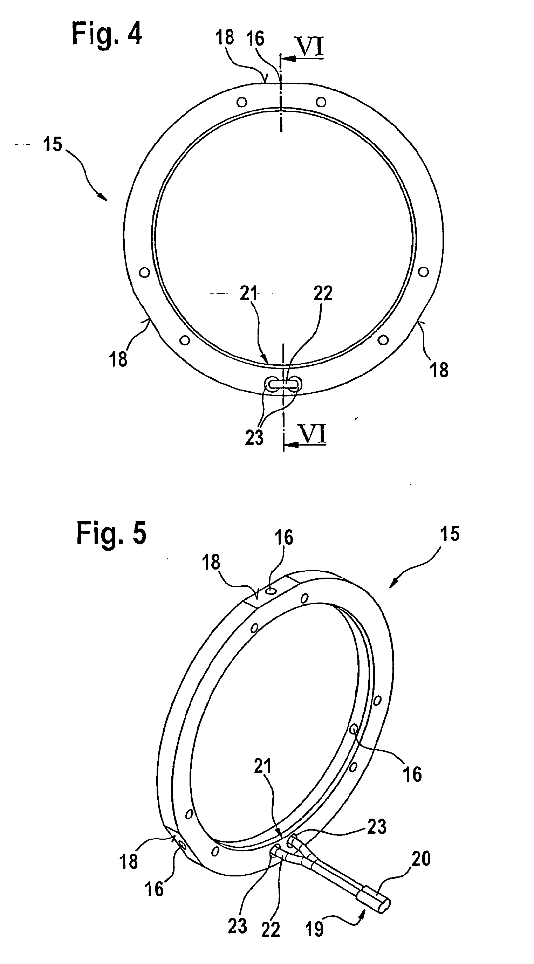

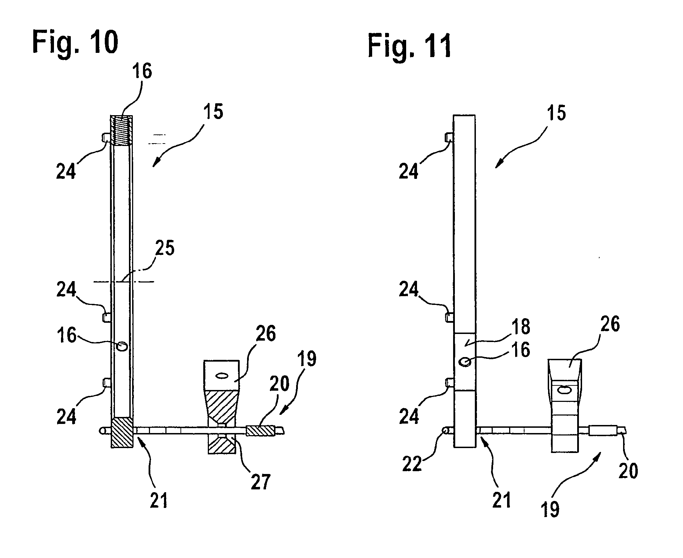

Das Auslöseelement 15 dient - wie bereits erwähnt - zur Verwendung in einem Sicherungssystem 13 für die Abreißkupplung 10. Dabei ist das Auslöseelement 15 zum gegenüber den Kupplungshälften 11, 12 berührungslosen Sichern des Sicherungselementes 14 ausgebildet. Hierzu weist das Auslöseelement 15 eine Form auf, die in montiertem Zustand des Auslöseelementes 15 einen Abstand zwischen dem Auslöseelement 15 und einer der Kupplungshälften 11, 12 schafft. In der gezeigten Ausführungsform gemäß der Figuren 4 bis 11 ist das Auslöseelement 15 ringförmig ausgebildet, kann jedoch auch andere Formen aufweisen. Durch Form, Ausbildung und Dimensionierung des Auslöseelementes 15 ist sichergestellt, dass das Auslöseelement 15 in verbundenem Zustand der Kupplungshälften 11, 12 und montiertem Zustand des Auslöseelementes 15 ausschließlich in direkter Wirkverbindung mit dem Sicherungselement 14 ist.

Das Auslöseelement 15 weist mindestens eine, vorzugsweise jedoch mehrere radial gerichtete Öffnungen 16 auf. Die Öffnungen 16 dienen insbesondere zum Durchtritt von Spann- und/oder Rastelementen 17. Die Öffnungen 16 sind in der gezeigten Ausführung als Gewindebohrungen ausgebildet. Drei Öffnungen 16 bzw. Gewindebohrungen sind gleichmäßig über den Umfang verteilt. Im Bereich der Öffnungen 16 ist der Ring etwas abgeflacht ausgebildet, so dass dort ebene bzw. gerade Anlageflächen 18 ausgebildet sind. Die Anlageflächen 18 dienen dazu, dass sich das Auslöseelement 15 gegen das Sicherungselement 14 abstützen kann, so dass es quasi frei hängend lösbar am Sicherungselement 14 befestigt ist. In den Gewindebohrungen sind die Spann- und/oder Rasteelemente 17, z.B. Schrauben, die vorzugsweise als Druckstücke ausgebildet sind, angeordnet, die in radialer Richtung in der Position veränderbar sind.

Weiterhin ist dem Auslöseelement 15 ein Betätigungsmittel 19 zugeordnet. Das Betätigungsmittel 19 ist bevorzugt fest aber lösbar am Auslöseelement 15 befestigt. In der gezeigten Ausführungsform ist das Betätigungsmittel 19 ein Seilzug 20, der einen Befestigungspunkt 21 am Auslöseelement 15 aufweist. Der Befestigungspunkt 21 ist beispielhaft durch eine Schlinge 22 gebildet, die durch zwei Öffnungen 23 im Auslöseelement 15 gefädelt ist. Alternativ können auch mehrere Befestigungspunkte 21 vorgesehen sein, die sich gleichmäßig oder ungleichmäßig über den Umfang des Auslöseelementes 15 verteilen. Für den Fall, dass - wie dargestellt - nur ein Befestigungspunkt 21 vorgesehen ist, ist eine besonders bevorzugte Position des Befestigungspunktes 21 diametral gegenüber einer der Öffnungen 16. Da die Öffnungen 16 bzw. die Anlageflächen 18 einen Fixierungs- bzw. Haltebereich am - nachfolgend näher erläuterten - Sicherungselement 14 definieren, gewährleistet die genannte Positionierung einen besonders geeigneten Scharniereffekt zwischen Auslöseelement 15 und dem Sicherungselement 14.

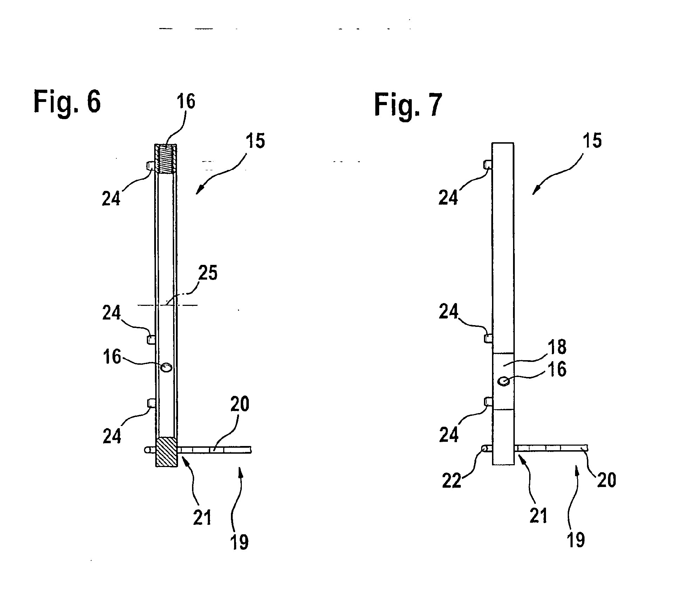

Optional kann dem Auslöseelement 15 des weiteren ein Abstandsmittel 24 (siehe z.B. Figuren 6 und 7) zugeordnet sein. Als Abstandsmittel 24 können Stifte, Bolzen, Schrauben oder jede andere Art von Vorsprüngen eingesetzt werden. Das Abstandsmittel 24 kann auch integraler Bestandteil des Auslöseelementes 15 sein. Das Abstandsmittel 24 erstreckt sich in Längsrichtung der Mittelachse 25 des Auslöseelementes 15, und zwar in die Richtung, die in montiertem Zustand dem Sicherungselement 14 zugewandt ist. Mittels des Abstandsmittels 24 wird erreicht, dass sich das Auslöseelement 15 bei Betätigung des Betätigungsmittels 19, nämlich bei Zug am Seilzug 20, nur in Zugrichtung bewegt. Anders ausgedrückt verhindert das Abstandsmittel 24 bei Zug ein Ausweichen des Auslöseelementes 15 entgegen der Zugrichtung.

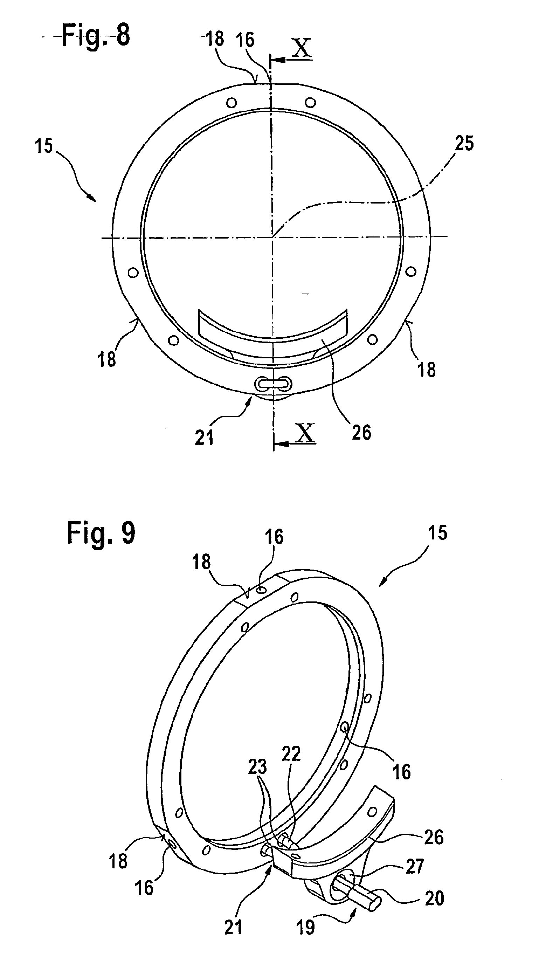

Insbesondere aus den Figuren 8 und 9 ist ersichtlich, dass dem Auslöseelement 15 bzw. genauer dem Betätigungsmittel 19 ein Führungsmittel 26 zugeordnet sein kann. Das Führungsmittel 26 ist zur Befestigung an einer der Kupplungshälften 11, 12 ausgebildet und weist in der gezeigten Ausführung die Form eines Kreissegmentes auf. Andere Formen und Ausbildungen, beispielsweise als Ring oder dergleichen sind ebenfalls möglich. Das Führungsmittel 26, das bevorzugt in einem Abstand zum Auslöseelement 15 angeordnet ist, weist zur Aufnahme des Betätigungsmittels 19, nämlich des Seilzuges 20 eine entsprechende Öffnung 27 auf.

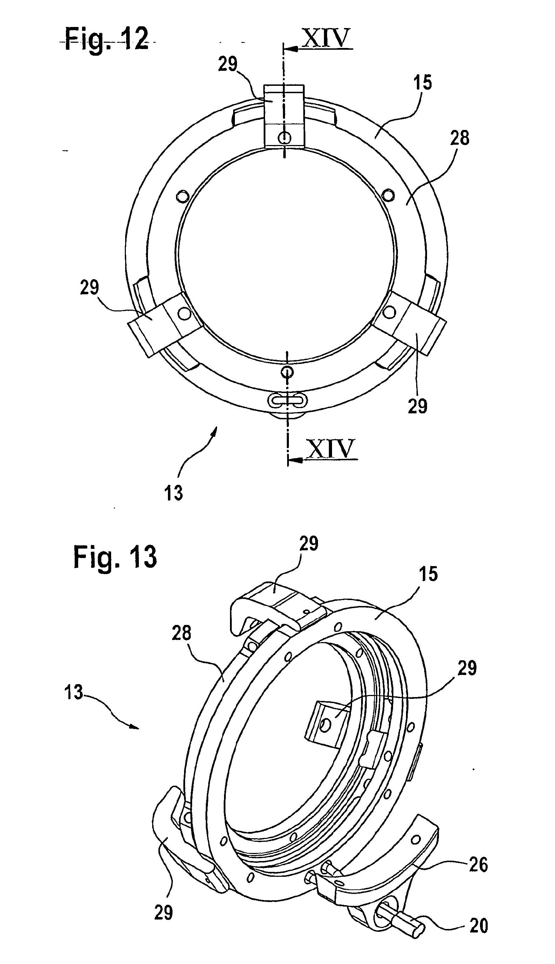

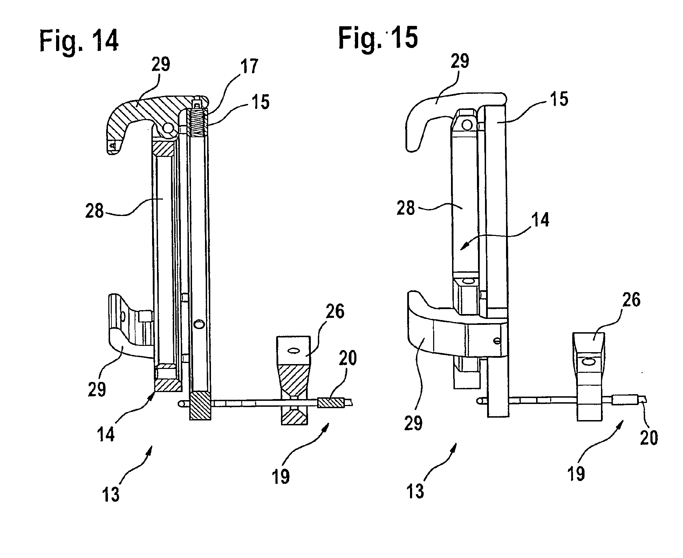

Das eben beschriebene Auslöseelement 15 ist neben der bereits erwähnten Verwendung für eine Kupplungsvorrichtung auch zum Sichern und Lösen anderer Komponenten geeignet. Besonders effektiv ist das Auslöseelement 15 aber-insbesondere in Kombination mit dem Sicherungselement 14. Zusammen bilden das Auslöseelement 15 und das Sicherungselement 14 das Sicherungssystem 13 (siehe insbesondere Figuren 12 bis 15). Das Sicherungselement 14 ist aus einem ringförmigen Träger 28 (siehe z.B. Figuren 12 und 13) gebildet. An dem Träger 28 sind mehrere, vorzugsweise drei Hebelelemente 29 angeordnet. Die Hebelelemente 29 oder auch Kipphebel mit einer vorzugsweise prismatischen Form sind gleichmäßig über den Umfang des Trägers 28 verteilt und schwenkbar an diesem mittels (nicht explizit dargestellter) Achsen oder Wellen in dafür vorgesehenen Ausnehmungen angeordnet.

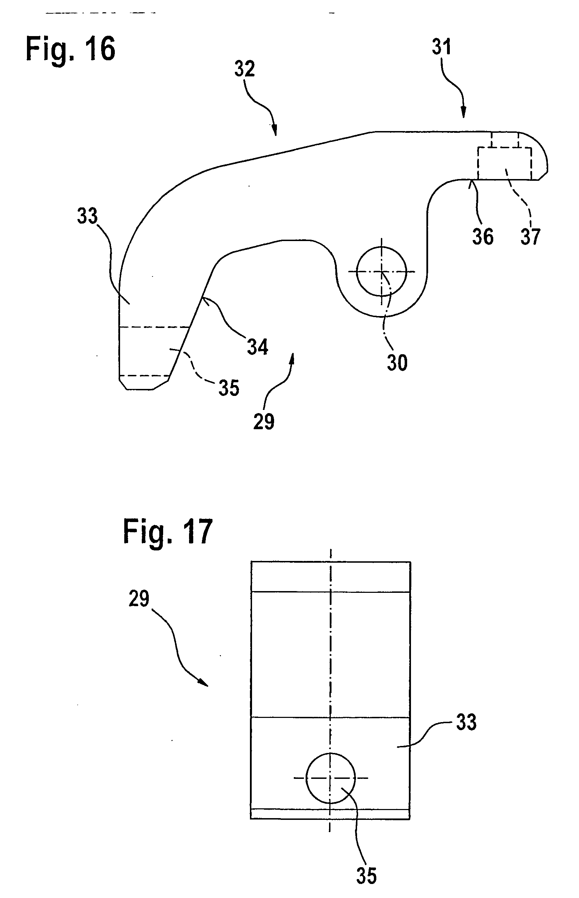

Die Hebelelemente 29 (siehe insbesondere Figur 16) sind im Bereich eines Schwenkpunktes 30 an dem Träger 28 gelagert. Der Schwenkpunkt 30 ist mit Bezug auf das Hebelelement 29 asymmetrisch angeordnet. Das bedeutet, dass jedes Hebelelement 29 einen kurzen Arm 31 und einen langen Arm 32 aufweist. Die in Seitenansicht F-förmigen Halteelemente 29 weisen einen Schenkel 33 auf, der zur Anlage an einer der Kupplungshälften 11, 12 oder an anderen Elementen korrespondierend ausgebildet ist und eine Kontaktfläche 34 aufweist. Des weiteren weist das Halteelement 29 im Schenkel 33 eine Durchgangsbohrung 35 auf. Die Durchgangsbohrung 35 dient zum Durchtritt von Befestigungselementen, Handhabungsvorrichtungen oder dergleichen und ist z.B. mittels eines Blindstopfens oder dergleichen verschließbar. Die Hebelelemente 29 sind derart ausgebildet und angeordnet,-dass das Auslöseelement 15 ausschließlich von den Hebelelementen 29 aufgenommen und gehalten wird.

Die Hebelelemente 29 werden durch das Auslöseelement 15 in Halte- bzw. Schließstellung gehalten. Das Auslöseelement 15 ist derart dimensioniert, dass es von innen in die sich in Schließstellung befindlichen Hebelelemente 29 einsetzbar ist. Anders ausgedrückt ist der Außendurchmesser des Auslöseelementes 15 bevorzugt gleich oder geringfügig größer als der durch die Innenseiten, also dem Kupplungselement 11 zugewandten Seiten des kurzen Armes 31 der Hebelelemente 29 in Schließstellung, definierten bzw. beschriebenen Innendurchmessers. Der Innendurchmesser des Auslöseelementes 15 ist derart ausgebildet, dass sich das Auslöseelement 15 über die Kupplungshälfte 11 bis in den Bereich der Hebelelemente 29 schieben lässt. Die Hebelelemente 29 weisen an ihren Innenseiten im Bereich des kurzen Armes 31 Anschlussflächen 36 auf, die in gesichertem Zustand an den Anlageflächen 18 des Auslöseelementes 15 anliegen. Im Bereich der Anschlussflächen 36 sind jeweils Ausnehmungen 37 ausgebildet, deren Bedeutung weiter unten beschrieben werden.

Die Ausnehmungen 37 dienen zur Aufnahme der Spannelemente 17. Durch das Verspannen des Auslöseelementes 15 zwischen den kurzen Armen 31 der Hebelelemente 29 einerseits und mittels der in den Ausnehmungen 37 eingerasteten Spannelemente 17 andererseits, die in radialer Richtung über den Umfang des Auslöseelementes 15 hinausragen, sind die Hebelelemente 29 in ihrer Schließstellung fixiert.

Der Träger 28 ist in der gezeigten Ausführungsform ein separates Teil, also nicht integraler Bestandteil einer der Kupplungshälften 11, 12. Alternativ kann der Träger 28 jedoch auch fest mit einem der Kupplungshälften 11, 12 verbunden oder auch integraler Bestandteil derselben sein. In gekuppeltem Zustand ist der Träger 28 einer der Kupplungshälften 11, 12 zugeordnet und liegt an einer geraden bzw. zylindrischen Anschlussfläche 38 der Kupplungshälfte 11, 12 an. Genauer stützt sich der Träger 28 an einer der Kupplungshälften 11, 12 ab. Die Hebelelemente 29 greifen um die Anschlussfläche 38 der Kupplungshälfte 12 und eine angeschrägt ausgebildete Anschlussfläche 39 der Kupplungshälfte 11 herum, so dass die Hebelelemente 29 mit ihrer Kontaktfläche 34 zur Herstellung einer Wirkverbindung in direktem Kontakt mit der Kupplungshälfte 11 bzw. deren Anschlussfläche 39 stehen.

Zur Einstellung der Spannkraft bzw. Haltekraft der Hebelelemente 29 an den Kupplungshälften 11, 12 sind zusätzliche Spannelemente 40 vorgesehen. Dies können z.B. Schrauben sein, die in Gewindebohrungen der Kupplungshälfte 11 schraubbar sind. Korrespondierend bzw. fluchtend zu den Gewindebohrungen sind in der Kupplungshälfte 12 ebenfalls Bohrungen vorgesehen, die wiederum fluchtend zu den Durchgangsbohrungen 35 in den Hebelelementen 29 sind. Dadurch, dass sich die Spannelemente 40 an dem Träger 28 abstützen können, kann die Spannkraft in Abhängigkeit der Position der Spannelemente 40 erhöht oder reduziert werden. Anders ausgedrückt, lässt sich ein Spalt zwischen dem Träger 28 einerseits und der Kupplungshälfte 11 andererseits einstellen. Um eine Grundeinstellung der Spannkraft bzw. Haltekraft zu sichern, sind zusätzliche Fixierungselemente 41, beispielsweise Schrauben, vorgesehen, die sich durch die Kupplungshälften 11, 12 bis in den Bereich des Trägers 28 erstrecken und die mittels der Spannelement 40 eingestellte Verbindung fixieren. Da die Fixierungselemente 41 in gekuppeltem Zustand mindestens teilweise durch Überdeckung durch die Kupplungshälfte 12 bzw. einen Blindstopfen oder dergleichen verdeckt sind, ist eine unerwünschte Verstellung/Betätigung wirksam verhindert. Des weiteren sichern die Fixierungselemente 41 die mittels der Spannelemente 40 voreingestellte Grundeinstellung, so dass eine Mehrfachbetätigung ohne Einstellaufwand möglich ist.

Im folgenden wird kurz die Funktionsweise der Abreißkupplung 10 erläutert: Die Kupplungshälften 11, 12 sind miteinander verbunden, indem die Hebelelemente 29 des Sicherungselementes 14 mit ihren angeschrägten Kontaktflächen 34 an den Anschlussflächen 39 der Kupplungshälfte 11 anliegen und durch das Auslöseelement 15 in Schließstellung gehalten werden. Durch Ziehen am Seilzug 20 wird das Auslöseelement 15 aus mindestens einem Hebelelement 29 heraus gezogen. Anders ausgedrückt bewirkt der Zug, dass die Wirkverbindung zwischen dem Auslöseelement 15 und mindestens einem Hebelelement 29 unterbrochen wird. Sobald jedoch ein Hebelelement 29 den Kontakt/die Wirkverbindung zu dem Auslöseelement 15 verliert, verliert das gesamte Sicherungssystem seine Stabilität und fällt quasi in sich zusammen.

## Patentansprüche

1. Sicherungssystem zum Verbinden und Lösen zweier Kupplungshälften (11, 12), umfassend ein Sicherungselement (14) mit mindestens zwei schwenkbar gelagerten Hebelelementen (29) sowie ein Auslöseelement (15), **dadurch gekennzeichnet, dass** die Hebelelemente (29) als jeweils zweiarmige Kipphebel derart ausgebildet und angeordnet sind, dass das Auslöseelement (15) ausschließlich von den Kipphebeln aufgenommen und gehalten wird.

2. Sicherungssystem nach Anspruch 1, **dadurch gekennzeichnet, dass** das Auslöseelement (15) zum gegenüber den Kupplungshälften (11, 12) berührungslosen Sichern des Sicherungselementes (14) ausgebildet ist.

3. Sicherungssystem nach Anspruch 1 oder 2, **dadurch gekennzeichnet, dass** das Sicherungselement (14) aus einem Träger (28) mit drei daran angeordneten Kipphebeln gebildet ist.

4. Sicherungssystem nach einem der Ansprüche 1 bis 3, **dadurch gekennzeichnet, dass** das Sicherungselement (14) als separates Element vollständig von den Kupplungshälften (11, 12) lösbar ist.

5. Sicherungssystem nach einem der Ansprüche 1 bis 4, **dadurch gekennzeichnet, dass** die Kipphebel schwenkbar am Träger (28) gelagert sind, wobei der Schwenkpunkt (30) in Bezug auf die Kipphebel zur Bildung eines kurzen Arms (31) und eines langen Arms (32) asymmetrisch angeordnet ist.

6. Sicherungssystem nach einem der Ansprüche 1 bis 5, **dadurch gekennzeichnet, dass** die Kipphebel im Profil eine prismatische Form aufweisen.

7. Sicherungssystem nach Anspruch 5, **dadurch gekennzeichnet, dass** die Kipphebel an ihren kurzen Armen (31) innenseitig Anschlussflächen (36) zur Aufnahme des Auslöseelementes (15) aufweisen.

8. Sicherungssystem nach einem der Ansprüche 1 bis 7, **dadurch gekennzeichnet, dass** die Kipphebel jeweils eine Kontaktfläche (34) aufweisen, die mit Anschlussflächen (39) der Kupplungshälfte (11) korrespondieren.

9. Sicherungssystem nach einem der Ansprüche 1 bis 8, **dadurch gekennzeichnet, dass** das Auslöseelement (15) derart dimensioniert ist, dass es in verbundenem Zustand der Kupplungshälften (11, 12) ausschließlich in direkter Wirkverbindung mit dem Sicherungselement (14) ist.

10. Sicherungssystem nach einem der Ansprüche 1 bis 9, **dadurch gekennzeichnet, dass** das Auslöseelement (15) ein Ring ist, der derart ausgebildet ist, dass er sich gegenüber dem Sicherungselement (14) abstützt.

11. Sicherungssystem nach einem der Ansprüche 1 bis 10, **dadurch gekennzeichnet, dass** dem Auslöseelement (15) ein Betätigungsmittel (19) zugeordnet ist.

12. Sicherungssystem nach Anspruch 11, **dadurch gekennzeichnet, dass** das Betätigungsmittel (19) ein Seilzug (20) ist, wobei der Seilzug (20) mindestens einen Befestigungspunkt (21) am Auslöseelement (15) aufweist.

13. Sicherungssystem nach Anspruch 12, **dadurch gekennzeichnet, dass** der Befestigungspunkt (21) für das Betätigungsmittel (19) diametral einer der Anlageflächen (18) des Auslöseelementes (15) an den Kipphebeln gegenüber liegt.

14. Sicherungssystem nach einem der Ansprüche 1 bis 13, **dadurch gekennzeichnet, dass** dem Auslöseelement (15) Abstandsmittel (24) zugeordnet sind, die sich in Längsrichtung der Mittelachse (25) des Auslöseelementes (15) erstrecken.

15. Sicherungssystem nach einem der Ansprüche 11 bis 14, **dadurch gekennzeichnet, dass** dem Betätigungsmittel (19) ein Führungsmittel (26) zugeordnet ist.

16. Abreißkupplung zum Verbinden von flüssige oder gasförmige Medien transportierenden Förderleitungen, umfassend zwei lösbar miteinander verbundene Kupplungshälften (11, 12), die jeweils über Absperrmittel verfügen, wobei die Absperrmittel in zusammengefügtem Zustand der Kupplungshälften (11, 12) einen Durchstrom des zu transportierenden Mediums gewährleisten und beim Trennen der Kupplungshälften (11, 12) diese zwangsläufig dichtend verschließen, und ein Sicherungssystem (13) zum Verbinden und Lösen der Kupplungshälften (11, 12), **dadurch gekennzeichnet, dass** das Sicherungssystem (13) nach einem der Ansprüche 1 bis 15 ausgebildet ist.

## Claims

1. Securing system for connecting and disconnecting two coupling halves (11, 12), comprising a securing element (14) having at least two pivotable lever elements (29) as well as a releasing element (15), **characterized in that** the lever elements (29) are each designed and arranged as two-armed tilt levers such that the releasing element (15) is received and held exclusively by the tilt levers.

2. Securing system according to claim 1, **characterized in that** the releasing element (15) is designed to secure the securing element (14) contact-free with respect to the coupling halves (11, 12).

3. Securing system according to claim 1 or 2, **characterized in that** the securing element (14) is formed by a bearer (28) having three tilt levers arranged thereon.

4. Securing system according to any one of claims 1 to 3, **characterized in that** the securing element (14) is completely releasable from the coupling halves (11, 12) as a separate element.

5. Securing system according to any one of claims 1 to 4, **characterized in that** the tilt levers are pivotably mounted on the bearer (28), the pivot point (30) being arranged asymmetrically with respect to the tilt lever for forming a short arm (31) and a long arm (32).

6. Securing system according to any one of claims 1 to 5, **characterized in that** the tilt levers have a prismatic form when seen in profile.

7. Securing system according to claim 5, **characterized in that** the tilt levers have connecting surfaces (36) on the inside of their short arms (31) for receiving the releasing element (15).

8. Securing system according to any one of claims 1 to 7, **characterized in that** the tilt levers each have a contact surface (34) corresponding to connecting surfaces (39) of the coupling half (11).

9. Securing system according to any one of claims 1 to 8, **characterized in that** the releasing element (15) is sized such that, in connected state of the coupling halves (11, 12), it is exclusively in direct engagement with the securing element (14).

10. Securing system according to any one of claims 1 to 9, **characterized in that** the releasing element (15) is a ring designed such that it is supported with respect to the securing element (14).

11. Securing system according to any one of claims 1 to 10, **characterized in that** an actuating means (19) is associated with the releasing system (15).

12. Securing system according to claim 11, **characterized in that** the actuating means (19) is a cable pull (20), the cable pull (20) having at least one fastening point (21) on the releasing element (15).

13. Securing system according to claim 12, **characterized in that** the fastening point (21) for the actuating means (19) is diametrically opposed to one of the abutting surfaces (18) of the releasing element (15) on the tilt levers.

14. Securing system according to any one of claims 1 to 13, **characterized in that** spacer means (24) are associated with the releasing element (15), the spacer means (24) extending in longitudinal direction of the central axis (25) of the releasing element (15).

15. Securing system according to any one of claims 11 to 14, **characterized in that** a guide means (26) is associated with the actuating means (19).

16. Breaking coupling for connecting conveyor lines transporting liquid or gaseous media, comprising two coupling halves (11, 12) releasably connected with each other, each having stopping means, the stopping means safeguarding a flow of the medium to be transported in joined state of the coupling halves (11, 12) and inevitably sealing the coupling halves (11, 12) when these are separated, and a securing system (13) for connecting and disconnecting the coupling halves (11, 12), **characterized in that** the securing system (13) is designed according to any one of claims 1 to 15.

## Revendications

1. Système de sûreté destiné à solidariser et désolidariser deux moitiés d'accouplement (11, 12), ledit système de sûreté comportant un élément de sûreté (14) doté d'au moins deux éléments de levier (29) montés de façon à pouvoir pivoter ainsi qu'un élément de déclenchement (15), **caractérisé en ce que** les éléments de levier (29) sont chacun conformés en levier basculant à deux bras et disposés de façon à ce que l'élément de déclenchement (15) soit pris et maintenu exclusivement par les leviers basculants.

2. Système de sûreté selon la revendication 1, **caractérisé en ce que** l'élément de déclenchement (15) est conformé de façon à bloquer l'élément sûreté (14) sans contact par rapport aux moitiés d'accouplement (11, 12).

3. Système de sûreté selon la revendication 1 ou 2, **caractérisé en ce que** l'élément de sûreté (14) est constitué d'un support (28) sur lequel est disposé trois leviers basculants.

4. Système de sûreté selon l'une des revendications 1 à 3, **caractérisé en ce que** l'élément de sûreté (14) peut être entièrement désolidarisé, en tant qu'élément séparé, des moitiés d'accouplement (11, 12).

5. Système de sûreté selon l'une des revendications 1 à 4, **caractérisé en ce que** les leviers basculants sont montés sur le support (28) de façon à pouvoir pivoter, le point de pivotement (30) étant disposé asymétriquement par rapport aux leviers basculants pour former un bras court (31) et un bras long (32).

6. Système de sûreté selon l'une des revendications 1 à 5, **caractérisé en ce que** les leviers basculants ont de profil une forme prismatique.

7. Système de sûreté selon la revendication 5, **caractérisé en ce que** les leviers basculants présentent du côté intérieur de leur bras court (31) des surfaces de raccordement (36) destinées à recevoir l'élément de déclenchement (15).

8. Système de sûreté selon l'une des revendications 1 à 7, **caractérisé en ce que** les leviers basculants présentent chacun une surface de contact (34) qui correspond à une surface de raccordement (39) de chacune des moitiés d'accouplement (11).

9. Système de sûreté selon l'une des revendications 1 à 8, **caractérisé en ce que** l'élément de déclenchement (15) est dimensionné de façon à être exclusivement en liaison active directe avec l'élément de sûreté (14) lorsque les deux moitiés d'accouplement (11, 12) sont solidarisées.

10. Système de sûreté selon l'une des revendications 1 à 9, **caractérisé en ce que** l'élément de déclenchement (15) est une bague qui est conformée de façon à s'appuyer contre l'élément de sûreté (14).

11. Système de sûreté selon l'une des revendications 1 à 10, **caractérisé en ce qu'**un moyen d'actionnement (19) est associé à l'élément de déclenchement (15).

12. Système de sûreté selon la revendication 11, **caractérisé en ce que** le moyen d'actionnement (19) est un câble (20), le câble (20) comportant au moins un point (21) de fixation à l'élément de déclenchement (15).

13. Système de sûreté selon la revendication 12, **caractérisé en ce que** le point (21) de fixation du moyen d'actionnement (19) est placé de façon diamétralement opposée à l'une des surfaces d'appui (18) de l'élément de déclenchement (15) au niveau des leviers basculants.

14. Système de sûreté selon l'une des revendications 1 à 13, **caractérisé en ce que** des moyens d'écartement (24) sont associés à l'élément de déclenchement (15), et s'étendent dans une direction longitudinale de l'axe médian (25) de l'élément de déclenchement (15).

15. Système de sûreté selon l'une des revendications 11 à 14, **caractérisé en ce qu'**un moyen de guidage (26) est associé au moyen d'actionnement (19).

16. Accouplement détachable destiné à relier des conduits d'alimentation transportant des fluides liquides ou gazeux, ledit accouplement amovible comportant deux moitiés d'accouplement (11, 12) qui sont reliées l'une à l'autre de façon amovible et qui disposent chacune de moyens de verrouillage, les moyens de verrouillage assurant un écoulement du fluide à transporter lorsque les moitiés d'accouplement (11, 12) sont assemblés et fermant les moitiés d'accouplement (11, 12) de façon forcée et étanche lorsque celles-ci sont séparées, et un système de sûreté (13) destiné à solidariser et désolidariser les moitiés d'accouplement (11, 12), **caractérisé en ce que** le système de sûreté (13) est conformé selon l'une des revendications 1 à 15.
